(19) Europäisches Patentamt / European Patent Office / Office européen des brevets

(11) **EP 1 929 402 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(51) Int Cl.:
*G06F 11/00* (2006.01)  *G05B 23/02* (2006.01)

(21) Anmeldenummer: **06793186.5**

(22) Anmeldetag: **04.09.2006**

(86) Internationale Anmeldenummer:
**PCT/EP2006/065968**

(87) Internationale Veröffentlichungsnummer:
**WO 2007/039371 (12.04.2007 Gazette 2007/15)**

(54) **VERFAHREN UND VORRICHTUNG ZUR RECHNERGESTÜTZTEN ANALYSE DER ZUVERLÄSSIGKEIT EINES TECHNISCHEN SYSTEMS**

METHOD FOR THE COMPUTER-ASSISTED ANALYSIS OF THE RELIABILITY OF A TECHNICAL SYSTEM, CORRESPONDING DEVICE, AND CORRESPONDING TECHNICAL SYSTEM

PROCEDE ET DISPOSITIF D'ANALYSE INFORMATISEE DE LA FIABILITE D'UN SYSTEME TECHNIQUE ET SYSTEME TECHNIQUE CORRESPONDANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.09.2005  DE 102005046945**

(43) Veröffentlichungstag der Anmeldung:
**11.06.2008  Patentblatt 2008/24**

(73) Patentinhaber: **SIEMENS AKTIENGESELLSCHAFT**
**80333 München (DE)**

(72) Erfinder:
• **SUTOR, Ariane**
  **82166 Gräfelfing (DE)**
• **EHLERS, Petra**
  **85107 Baar-Ebenhausen (DE)**
• **KLEIN, Wolfram**
  **85579 Neubiberg (DE)**

(56) Entgegenhaltungen:
• **SUES R H ET AL: "System reliability and sensitivity factors via the MPPSS method" PROBALISTIC ENGINEERING MECHANICS, COMPUTATIONAL MECHANICS PUBLICATIONS, SOUTHAMPTON, FR, Bd. 20, Nr. 2, April 2005 (2005-04), Seiten 148-157, XP004995329 ISSN: 0266-8920**
• **AWTRY M H ET AL: "Logistics engineering workstations for concurrent engineering applications" AEROSPACE AND ELECTRONICS CONFERENCE, 1991. NAECON 1991., PROCEEDINGS OF THE IEEE 1991 NATIONAL DAYTON, OH, USA 20-24 MAY 1991, NEW YORK, NY, USA,IEEE, US, 20. Mai 1991 (1991-05-20), Seiten 1253-1259, XP010048199 ISBN: 0-7803-0085-8**
• **SCHNEIDEWIND N F: "Modelling the fault correction process" SOFTWARE RELIABILITY ENGINEERING, 2001. ISSRE 2001. PROCEEDINGS. 12TH INTERNATIONAL SYMPOSIUM ON 27-30 NOV 2001, PISCATAWAY, NJ, USA,IEEE, 27. November 2001 (2001-11-27), Seiten 185-190, XP010583149 ISBN: 0-7695-1306-9**

**EP 1 929 402 B1**

**Beschreibung**

Die Erfindung betrifft ein Verfahren zur rechnergestützten Analyse der Zuverlässigkeit eines technischen Systems sowie eine entsprechende Vorrichtung und ein entsprechendes technisches System.

Technische Systeme umfassen häufig eine Vielzahl von einzelnen technischen Komponenten, deren Funktion von Parametern und insbesondere von Parameterintervallen abhängt, die den technischen Komponenten zugeordnet sind. Der Durchmesser der entsprechenden Parameterintervalle der einzelnen Komponenten beeinflusst insbesondere die Zuverlässigkeit der einzelnen Komponenten. Der Begriff Zuverlässigkeit ist hier und im folgenden allgemein zu verstehen, und es kann hierunter jede Art von Größe fallen, die auf beliebige Weise zum Ausdruck bringt, wie stabil das System zu einem bestimmten Zeitpunkt läuft. Die Zuverlässigkeit wird beispielsweise durch eine Systemzuverlässigkeitsfunktion beschrieben. Diese Funktion gibt für jeden Zeitpunkt an, mit welcher Wahrscheinlichkeit das System bis zu diesem Zeitpunkt ununterbrochen funktioniert. Als Kennwert, der die Zuverlässigkeit beschreibt, wird hierbei häufig der Erwartungswert der Systemzuverlässigkeitsfunktion verwendet.

Da technische Systeme heute eine große Anzahl von Unterkomponenten umfassen, ist es wünschenswert, auf einfache Weise zu ermitteln, welche Veränderungen beim Betrieb des technischen Systems, insbesondere bei der Wartung einzelner Komponenten, den größten Einfluss auf die Gesamtzuverlässigkeit des technischen Systems haben.

Aus dem Stand der Technik sind zur Ermittlung des Ausfallverhaltens technischer Systeme sogenannte Fehlerbaumanalysen bekannt. Hierbei sind die einzelnen Komponenten des technischen Systems mittels einer Bool'schen Algebra in einem Fehlerbaum miteinander verknüpft. Die Bool'sche Algebra gibt wieder, welchen Einfluss der Ausfall einer Komponente bzw. ein Fehler in einer Komponente auf die Stabilität des gesamten technischen Systems hat. Es handelt sich bei dieser Fehlerbaumanalyse um eine statische Analyse, mit der lediglich vorhergesagt werden kann, ob ein Gesamtfehler des Systems beim Auftreten von entsprechenden Fehlern in einem oder mehreren Unterkomponenten vorliegt.

Das Dokument Sues R. H. et al.: "System reliability and sensitivity factors via the MPPSS method", Probabilistic Engineering Mechanics, Computational Mechanics Publications, Southampton, FR, Bd. 20, Nr. 2, April 2005, Seiten 148-157, beschreibt ein probabilistisches Verfahren zur Zuverlässigkeitsanalyse eines technischen Systems. Es wird in dieser Druckschrift die Ermittlung von Sensitivitätsmaßen offenbart, welche die Sensitivität der Ausfallwahrscheinlichkeit des Systems auf eine Veränderung eines Parameters wiedergeben.

Aufgabe der Erfindung ist es, ein Verfahren zur Analyse der Zuverlässigkeit eines technischen Systems zu schaffen, welches dynamisch und insbesondere zeitabhängig Veränderungen der Zuverlässigkeit des technischen Systems in Abhängigkeit von den Unterkomponenten des Systems ermitteln kann.

Diese Aufgabe wird durch die unabhängigen Patentansprüche gelöst. Weiterbildungen der Erfindung sind in den abhängigen Ansprüchen definiert.

In dem erfindungsgemäßen Verfahren wird die Zuverlässigkeit der einzelnen technischen Komponenten des technischen Systems jeweils durch eine Komponentenfunktion beschrieben, die von wenigstens einem Parameter und einem der Komponente zugeordneten und die Zuverlässigkeit der Komponente beeinflussenden Parameterintervall des wenigstens einen Parameters abhängt. Aus diesen Zuverlässigkeiten der Komponenten wird eine Systemzuverlässigkeit des technischen Systems ermittelt, und anschließend wird für wenigstens einen Teil der Komponenten jeweils ein Veränderungsmaß bestimmt, welches ein Maß für die Veränderung der Systemzuverlässigkeit in Abhängigkeit von der Veränderung des Parameterintervalls der jeweiligen Komponente ist. Schließlich wird für wenigstens einen Teil der Komponenten jeweils aus dem Veränderungsmaß eine Einflussgröße der jeweiligen Komponente auf die Systemzuverlässigkeit ermittelt.

Der Erfindung liegt die Erkenntnis zugrunde, dass durch die Bestimmung der Veränderung der Systemzuverlässigkeit in Abhängigkeit von der Veränderung des Parameterintervalls der Einzelkomponenten des Systems auf einfache Weise ermittelt werden kann, welche der Einzelkomponenten den größten Einfluss auf das technische System hat. In einer bevorzugten Ausführungsform der Erfindung wird deshalb aus den ermittelten Einflussgrößen wenigstens eine Komponente bestimmt, welche einen größeren Einfluss als andere Komponenten, insbesondere den größten Einfluss von allen Komponenten, auf die Systemzuverlässigkeit hat.

Das erfindungsgemäße Verfahren hat den Vorteil, dass die Zuverlässigkeit und die Systemverfügbarkeit entscheidender Komponenten explizit bestimmt werden können. Hieraus können dann Strategien dahingehend entwickelt werden, wie das technische System im Betrieb überwacht bzw. gewartet werden soll. Insbesondere ergeben sich Möglichkeiten, gezielt technische Komponenten des Systems zu warten und hierdurch ein Optimum zwischen Kosten und Verfügbarkeit/Zuverlässigkeit beim Betrieb des technischen Systems zu erreichen.

In einer weiteren, besonders bevorzugten Ausführungsform wird als der wenigstens eine Parameter die Zeit verwendet, um hierdurch die zeitliche Dynamik der Zuverlässigkeit des technischen Systems zu bestimmen. Insbesondere betreffen die den Komponenten zugeordneten Parameterintervalle vorbestimmte Zeitintervalle, wobei in einer besonders bevorzugten Ausführungsform die Zeitintervalle Wartungsintervalle der technischen Komponenten des Systems repräsentieren. Durch die Bestimmung des Einflusses der einzelnen Wartungsintervalle auf das Gesamtsystem

2

können mit Hilfe des erfindungsgemäßen Verfahrens Optimierungsziele dahingehend erreicht werden, dass im Gesamtsystem möglichst lange Wartungsintervalle vorliegen. Das technische System kann gegebenenfalls jedoch auch im Hinblick auf andere Optimierungsziele optimiert werden. Beispiele von anderen Optimierungszielen sind eine bevorzugte Auswechslung von "einfach zugänglichen Komponenten" oder die bevorzugte Auswechslung von "finanziell billigen Komponenten".

Ein anderes Ziel kann die bevorzugte Auswechslung von nur denjenigen Komponenten sein, deren verbesserte Ausfallwahrscheinlichkeit nach ihrem Auswechseln eine gegenüber den anderen Komponenten deutlich größere Verbesserung der Gesamtausfallwahrscheinlichkeit des Systems liefert.

Vorzugsweise werden die einzelnen Komponentenfunktionen des technischen Systems durch hinlänglich aus dem Stand der Technik bekannte Wahrscheinlichkeits-Verteilungsfunktionen wiedergegeben, von denen man weiß, dass sie sehr gut Ausfallwahrscheinlichkeiten beschreiben. In Betracht kommen hierbei Verteilungen wie die Weibull-Verteilung und/oder die Gamma-Verteilung und/oder die Lognormal-Verteilung und/oder die Exponentialverteilung.

Vorzugsweise existiert für das technische System bereits ein Fehlerbaum, in dem die Zuverlässigkeiten der Komponenten über eine Bool'sche Algebra miteinander verknüpft sind. Dieser Fehlerbaum kann dann in dem erfindungsgemäßen Verfahren verwendet werden.

In einer besonders bevorzugten Ausführungsform der Erfindung sind die Veränderungsmaße jeweils die Ableitung der im Verfahren ermittelten Systemzuverlässigkeit nach dem jeweiligen Parameterintervall. Auf diese Weise kann sehr einfach numerisch bzw. analytisch das Veränderungsmaß berechnet werden.

Als Einflussgrößen, welche den Einfluss der jeweiligen Komponente auf die Systemzuverlässigkeit beschreiben, kommen in einer besonders bevorzugten Ausführungsform der Erfindung Integrale des Veränderungsmaßes der jeweiligen Komponente über den wenigstens einen Parameter in Betracht. Ebenso können die Einflussgrößen der Komponenten jeweils der Maximalwert des Absolutbetrages des Veränderungsmaßes der jeweiligen Komponente in einem Intervall des wenigstens einen Parameters sein. Die Einflussgrößen können jedoch auch durch den Absolutwert des Veränderungsmaßes an einem vorbestimmten Wert des wenigstens einen Parameters wiedergegeben werden.

Das erfindungsgemäße Verfahren kann in beliebigen technischen Systemen eingesetzt werden. In Betracht kommen hierbei z. B. Kraftwerke, insbesondere die Dampfturbinen von Kraftwerken, oder auch Steuerungssysteme, wie eine Motorsteuerung.

Neben dem oben beschriebenen Verfahren betrifft die Erfindung ferner eine Vorrichtung zur rechnergestützten Analyse eines technischen Systems, welche entsprechende Mittel zur Durchrührung des erfindungsgemäßen Verfahrens aufweist. Ebenso betrifft die Erfindung ein technisches System, welches eine solche Vorrichtung beinhaltet.

Die Erfindung umfasst ferner ein Computerprogrammprodukt mit einem auf einem maschinenlesbaren Träger gespeicherten Programmcode zur Ausführung des erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:

Fig. 1 ein Diagramm, welches beispielhaft die Verknüpfung durch eine Bool'sche Algebra von drei technischen Komponenten in einem technischen System in der Form eines Fehlerbaums zeigt;

Fig. 2 einen Graphen, der eine Ausführungsform einer Basisfunktion einer technischen Komponente und deren Ableitung zeigt, wobei die Basisfunktion die Ausfallwahrscheinlichkeit der technischen Komponente beschreibt;

Fig. 3 einen Graphen, der die kombinierte Ausfallwahrscheinlichkeit aus zwei identischen, über eine ODER-Verknüpfung miteinander kombinierten Basisfunktionen der Fig. 2 sowie die entsprechende Ableitung zeigt;

Fig. 4 einen Graphen analog zu Fig. 3, wobei die Wartungsintervalle der Basisfunktionen jedoch unterschiedlich gewählt sind;

Fig. 5 einen Graphen, der die Ausfallwahrscheinlichkeit von zwei identischen, über eine UND-Verknüpfung miteinander verbundenen Basisfunktionen der Fig. 2 und deren Ableitung zeigt;

Fig. 6 einen Graphen analog zu Fig. 5, wobei die Basisfunktionen jedoch unterschiedliche Wartungsintervalle aufweisen;

Fig. 7 einen Graphen, der eine Basisfunktion und eine Kombination von zwei Basisfunktionen von technischen Komponenten zeigt, wobei die technischen Komponenten gemäß dem Fehlerbaum der Fig. 1 miteinander zu verknüpfen sind;

Fig. 8          einen Graphen, der die Kombination von Funktionen gemäß Fig. 7 entsprechend dem Fehlerbaum der Fig. 1 darstellt;

Fig. 9 und Fig. 10          Graphen, welche Ableitungen der Funktion gemäß Fig. 8 nach unterschiedlichen Wartungsintervallen zeigen.

In den nachfolgend beschriebenen Ausführungsformen der Erfindung werden technische Systeme betrachtet, welche Komponenten aufweisen, deren Zuverlässigkeit durch sogenannte Basisfunktionen beschrieben wird, wobei die Basisfunktionen die Wahrscheinlichkeit eines Ausfalls der entsprechenden Komponente in Abhängigkeit von der Betriebszeit t des technischen Systems wiedergeben. Die Ausfallwahrscheinlichkeit hängt hierbei ferner von einem entsprechenden Wartungsintervall der technischen Komponente ab. Die Betriebszeit t entspricht somit dem Parameter im Sinne von Anspruch 1 und das Wartungsintervall entspricht dem Parameterintervall im Sinne von Anspruch 1.

Jede Basisfunktion einer technischen Komponente wird in den nachfolgend beschriebenen Ausführungsformen durch eine Exponentialverteilung beschrieben, welche wie folgt lautet:

$$f(t, t_0) = 1 - e^{-\lambda(t \bmod t_0)} \tag{1}$$

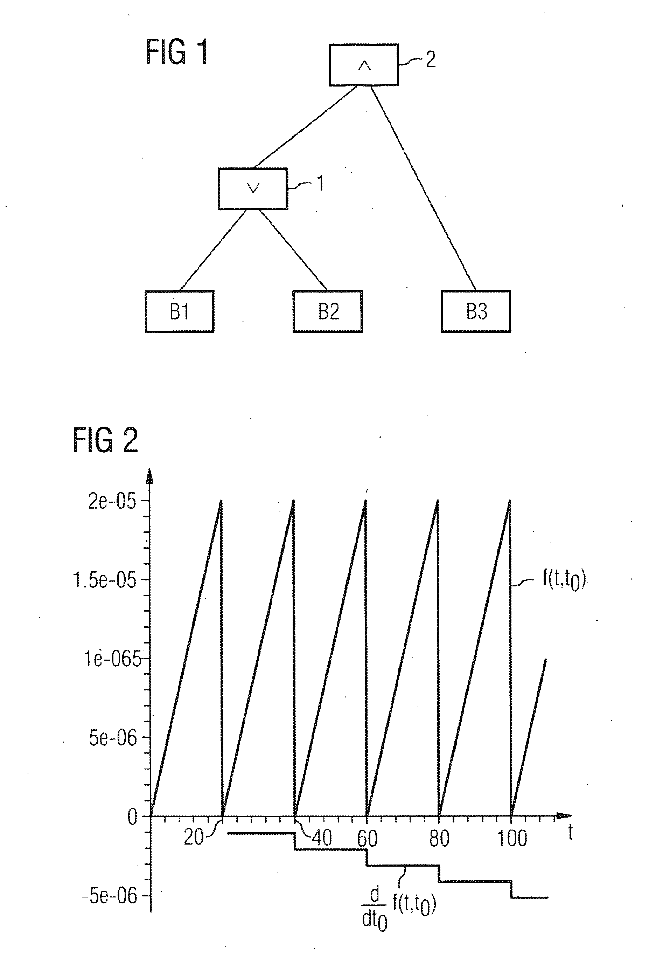

Hierbei ist $\lambda$ ein für die entsprechende technische Komponente spezifischer Parameter, t ist die Betriebszeit des technischen Systems und $t_0$ ist das Wartungsintervall der betrachteten Komponente. $t \bmod t_0$ bezeichnet die Modulo-Funktion. Das Verhalten der Funktion gemäß (1) wird noch näher in Bezug auf Fig. 2 beschrieben.

Fig. 1 zeigt ein Beispiel eines technischen Systems, welches drei technische Komponenten B1, B2 und B3 umfasst. Alle drei technischen Komponenten werden durch die Basisfunktion gemäß Gleichung (1) beschrieben, wobei sich jedoch die Wartungsintervalle der einzelnen Komponenten unterscheiden können. Die Darstellung der Fig. 1 entspricht einem sogenannten Fehlerbaum. Gemäß diesem Fehlerbaum sind die technischen Komponenten B1 und B2 über eine ODER-Verknüpfung 1 miteinander verknüpft, wobei diese ODER-Verknüpfung wiederum über eine UND-Verknüpfung 2 mit der technischen Komponente B3 verbunden ist. Der Fehlerbaum beschreibt folgendes Fehlerszenario: Ein Ausfall des technischen Systems tritt dann auf, wenn die Komponente B1 oder die Komponente B2 ausfällt und gleichzeitig mit dem Ausfall der Komponente B1 bzw. B2 auch die Komponente B3 ausfällt.

Im Folgenden wird die der technischen Komponente B1 zugeordnete Basisfunktion als $f_1(t, t_1)$ bezeichnet, wobei $t_1$ das Wartungsintervall von B1 ist. Analog bezeichnet $f_2(t, t_2)$ die Basisfunktion von B2 mit entsprechendem Wartungsintervall $t_2$ und $f_3(t, t_3)$ ist die entsprechende Basisfunktion von B3 mit Wartungsintervall $t_3$. Der Fehlerbaum der Fig. 1 lässt sich mathematisch als Kombination dieser Basisfunktionen schreiben. Die ODER-Verknüpfung 1 gemäß Fig. 1 zwischen den Funktionen $f_1(t, t_1)$ und $f_2(t, t_2)$ kann mathematisch wie folgt ausgedrückt werden:

$$f_1(t, t_1) \lor f_2(t, t_2) = f_1(t, t_1) + f_2(t, t_2) - f_1(t, t_1) \cdot f_2(t, t_2)$$

Die UND-Verknüpfung der Basisfunktion $f_3(t, t_3)$ mit der obigen ODER-Verknüpfung lässt sich mathematisch wie folgt durch eine Multiplikation darstellen:

$$(f_1(t, t_1) \lor f_2(t, t_2)) \land f_3(t, t_3) =$$
$$(f_1(t, t_1) \lor f_2(t, t_2)) \cdot f_3(t, t_3)$$

Diese Funktion entspricht somit der Ausfallwahrscheinlichkeit des gesamten technischen Systems. Sie ist in den hier beschriebenen Ausführungsformen gleichzusetzen mit der Systemzuverlässigkeit im Sinne von Anspruch 1.

Der Erfindung liegt die Erkenntnis zugrunde, dass über das Maß der Veränderung der Systemzuverlässigkeit in Abhängigkeit von der Veränderung der Wartungsintervalle der jeweiligen technischen Komponenten ermittelt werden kann, welche technische Komponente den größten Einfluss auf die Systemzuverlässigkeit hat. In den hier beschriebenen Ausführungsformen wird als Veränderungsmaß der jeweiligen technischen Komponente die Ableitung der Systemzuverlässigkeit nach dem Wartungsintervall, das heißt nach den Größen $t_1$ bzw. $t_2$ bzw. $t_3$, betrachtet.

Um die Ableitung der Basisfunktion gemäß Gleichung (1) zu bestimmen, wird zunächst die Modulo-Funktion wie folgt formuliert:

Für t, $t_0 \in \mathbf{R}$ mit $t_0 > 0$ gibt es eindeutig bestimmte Zahlen $q \in \mathbf{Z}$, $\mathbf{r} \in \mathbf{R}$ mit

$$1.\ t\ =\ t_0 q\ +\ r,$$

$$2.\ 0 \leq\ r\ <\ t_0.$$

$r := t \bmod t_0$.

Hieraus lässt sich allgemein die Ableitung $d/dt_0\, f(t, t_0)$ der Basisfunktion $f(t, t_0)$ wie folgt berechnen:

$$\frac{d}{dt_0} f(t, t_0) = \frac{d}{dt_0} (1 - e^{-\lambda(t \bmod t_0)}) = -\frac{d}{dt_0} e^{-\lambda(t - q t_0)} =$$

$$-e^{-\lambda t}[\lambda(\frac{dq}{dt_0} \cdot t_0 + q)e^{\lambda q t_0}] = -\lambda q e^{-\lambda(t \bmod t_0)}$$

Es werden hierbei immer Werte von t zwischen zwei Wartungszeitpunkten betrachtet, das heißt $t_0$ teilt nicht t.

Deshalb gilt:

$$\frac{dq}{dt_0} = 0$$

Im folgenden werden immer Basisfunktionen betrachtet, für die $\lambda = 0{,}000001$ gilt. In Fig. 2 ist eine entsprechende Basisfunktion gezeigt, wobei $t_0 = 20$ gewählt ist und als Einheit für die Zeit z.B. Stunden verwendet werden. Aufgrund der Wahl von $f(t, t_0)$ als Exponentialverteilung steigt die Wahrscheinlichkeit eines Ausfalls innerhalb eines Wartungsintervalls stark an und fällt nach der Wartung auf Null ab, da zu diesem Zeitpunkt die Wahrscheinlichkeit eines Ausfalls aufgrund der gerade durchgeführten Wartung im Wesentlichen Null beträgt.

In Fig. 2 ist ferner die Ableitung der Funktion $f(t, t_0)$ nach dem Wartungsintervall wiedergegeben. Man erkennt, dass diese Funktion $d/dt_0\, f(t, t_0)$ im ersten Intervall von t = 0 bis 20 Null ist und dann sehr schnell auf einen negativen Wert abfällt und in dem nächsten Wartungsintervall 20 bis 40 im Wesentlichen auf diesem Wert bleibt. Das gleiche Verhalten der Funktion zeigt sich bei allen folgenden Wartungsintervallen, so dass sich ein stufenweiser Abfall der Ableitungsfunktion ergibt. Vom Zeitpunkt t = 0 aus gesehen wirkt sich somit eine Änderung des Wartungsintervalls $t_0$ um so stärker aus, je weiter der dieser Zeitpunkt der Änderung in der Zukunft liegt. Je weiter der betrachtete Zeitpunkt von t = 0 entfernt ist, desto größer ist die Anzahl der durchgeführten Wartungen zum betrachteten Zeitpunkt, was eine größere Verschiebung der Basisfunktion bei Veränderung des Wartungsintervalls und somit eine höhere Sensitivität auf derartige Veränderungen bewirkt. Der Absolutwert der Funktion $d/dt_0\, f(t, t_0)$ drückt somit den Einfluss aus, den eine Veränderung des Wartungsintervalls auf das Verhalten der Basisfunktion $f(t, t_0)$ und somit auf die Zuverlässigkeit der technischen Komponente hat.

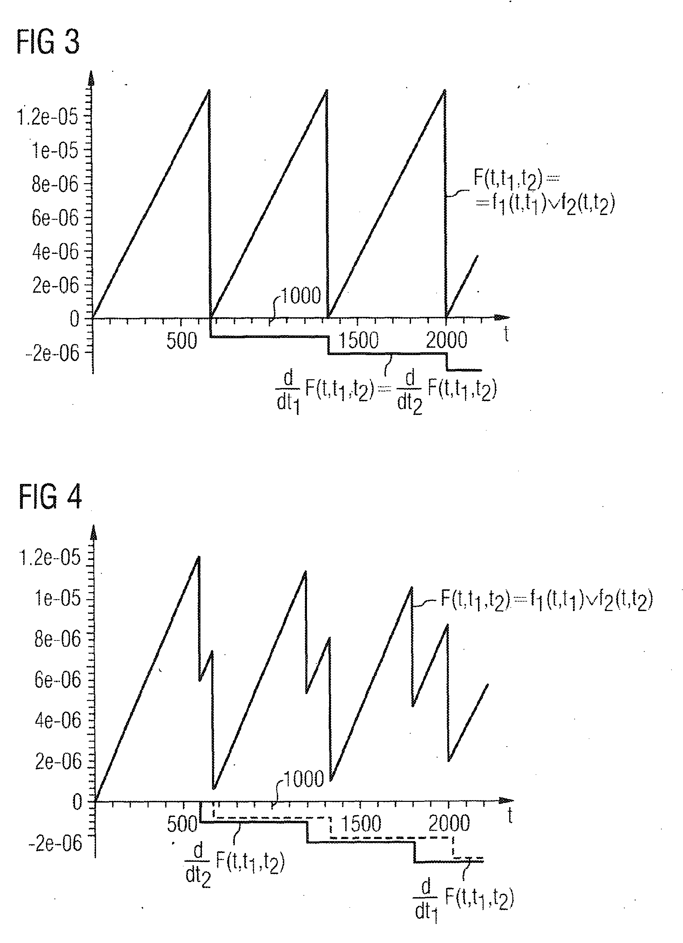

Fig. 3 zeigt eine ODER-Verknüpfung $F(t, t_1, t_2)$ der entsprechenden Basisfunktionen $f_1(t, t_1)$ und $f_2(t, t_2)$, wobei für beide Funktionen das gleiche Wartungsintervall $t_1 = t_2 = 672$ gewählt wurde. Die Werte in Richtung der Ordinate sind hierbei um den Faktor 1/100 skaliert. In Fig. 3 sind ferner die Ableitungen $d/dt_1\, F(t, t_1, t_2) = d/dt_2\, F(t, t_1, d_2)$ wiedergegeben. Das Verhalten dieser Ableitungen entspricht dem Verhalten der Ableitung gemäß Fig. 2, das heißt die Absolutwerte der Ableitungen nehmen stufenweise nach jeder Wartung zu und sind innerhalb des Wartungsintervalls im wesentlichen konstant. Die Ausfallrate (d. h. der Anteil an technischen Komponenten, der im nächsten Moment ausfallen wird) ist konstant bei Komponenten, denen exponentialverteilte Basisfunktionen zugrunde liegen. D. h. die Ausfallrate der durch die Funktionen $(f_1(t, t_1)$ ODER $f_2(t, t_2))$ beschriebenen Komponenten ist konstant. Somit verursacht eine Änderung des Wartungsintervalls nur dann eine Änderung der bedingten Ausfallwahrscheinlichkeit, wenn der betrachtete Zeitpunkt dadurch in eine andere Zahl von Wartungsintervallen kommt.

Fig. 4 zeigt analog eine Darstellung zu Fig. 3, wobei jedoch der Wartungszeitraum für die Funktion $f_1(t, t_1)$ unterschiedlich zum Wartungsintervall der Funktion $f_2(t, t_2)$ gewählt wurde. Insbesondere gilt: $t_1 = 670$ und $t_2 = 600$. Die dargestellte ODER-Funktion $F(t, t_1, t_2)$ ist hierbei wiederum um den Faktor 1/100 skaliert. In Fig. 4 sind ferner die beiden Ableitungen $d/dt_1 F(t, t_1, t_2)$ und $d/dt_2 F(t, t_1, t_2)$ wiedergegeben, welche sich nunmehr unterscheiden. Aufgrund der ODER-Verknüpfung der beiden Funktionen mit den unterschiedlichen Wartungsintervallen, fällt die Gesamtfunktion nie auf Null ab, da bei der Wartung der einen technischen Komponente die andere technische Komponente nicht gewartet wird und somit immer eine Ausfallwahrscheinlichkeit vorliegt, welche durch die Basisfunktion der nicht gewarteten technischen Komponente bewirkt wird. Das Verhalten der Ableitungen entspricht qualitativ dem Verhalten aus Fig. 3, wobei ein Sprung der Ableitung $d/dt_2 F(t, t_1, t_2)$ zum früheren Wartungszeitpunkt $t_2$ erfolgt, wohingegen die Ableitung $d/dt_1 F(t, t_1, t_2)$ immer nach Ablauf des längeren Wartungsintervalls $t_1$ auf einen neuen Wert springt.

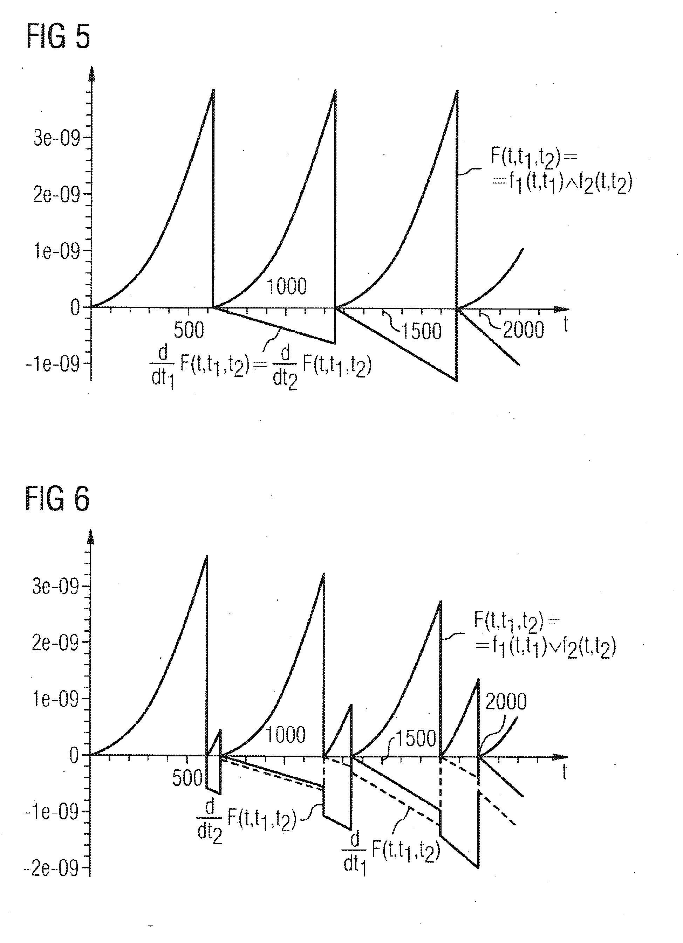

Fig. 5 zeigt die UND-Verknüpfung $F(t, t_1, t_2)$ von zwei exponentialverteilten Basisfunktionen $f_1(t, t_1)$ und $f_2(t, t_2)$. Hierbei sind die Wartungsintervalle $t_1$ und $t_2$ identisch. Ferner sind die Ableitungen der Funktion $F(t, t_1, t_2)$ nach $t_1$ bzw. $t_2$ wiedergegeben, wobei beide Ableitungsfunktionen identisch sind. Im Unterschied zu der zuvor diskutierten ODER-Verknüpfung sind die Ableitungsfunktionen innerhalb der Wartungsintervalle nicht konstant, sondern sie sind zu Beginn des Wartungsintervalls immer Null und fallen dann kontinuierlich ab. Der Abfall wird hierbei mit zunehmender Anzahl von Wartungsintervallen immer größer. Mit zunehmender Zeit im Wartungsintervall steigt aufgrund der UND-Verknüpfung die Ausfallrate der Komponenten und somit auch die Auswirkung auf die Systemausfallwahrscheinlichkeit $F(t, t_1, t_2)$. Die größere Steigung der Ableitungen zu späteren Zeitpunkten ist darauf zurückzuführen, dass eine Veränderung des Wartungsintervalls eine größere Verschiebung der Funktion $F(t, t_1, t_2)$ zu späteren Zeitpunkten bewirkt.

Fig. 6 zeigt ein Diagramm analog zur Fig. 5, wobei die mit einer UND-Verknüpfung miteinander verbundenen Funktionen nunmehr unterschiedliche Wartungsintervalle $t_1$ bzw. $t_2$ aufweisen. Insbesondere gilt $t_1 = 670$ und $t_2 = 600$. Auch in Fig. 6 nehmen mit zunehmender Anzahl an Wartungen die Steigungen der Ableitungen nach beiden Wartungsintervallen zu, wodurch die Sensitivität des Gesamtsystems gegenüber Veränderungen in den Wartungsintervallen steigt.

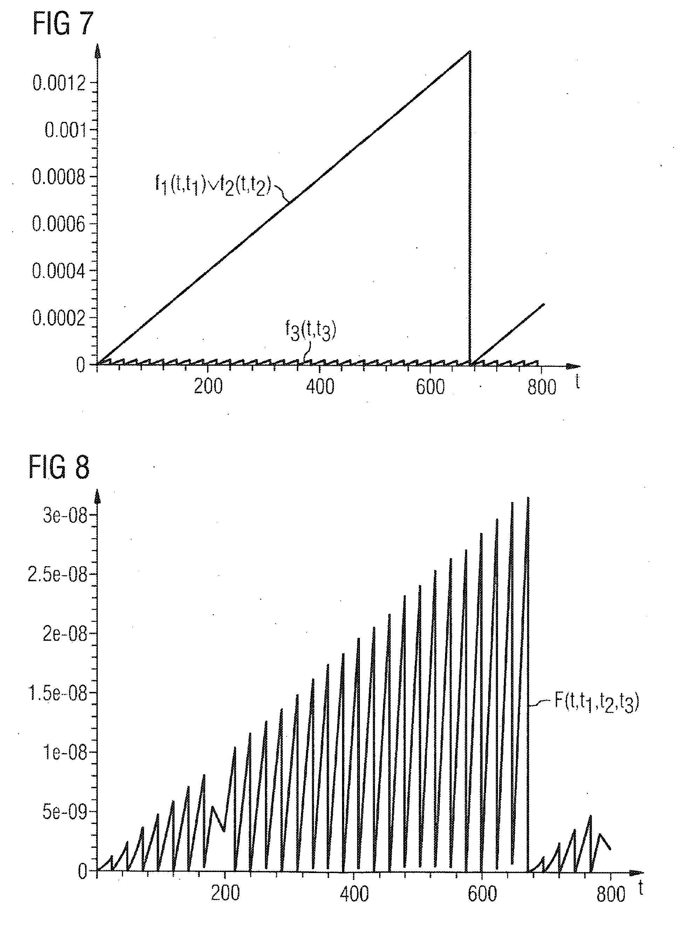

Die Fig. 7 bis 10 zeigen Auswertungen eines technischen Systems mit den Komponenten B1 bis B3, wobei die Ausfallwahrscheinlichkeiten der einzelnen Komponenten gemäß dem Fehlerbaum der Fig. 1 miteinander verknüpft sind. Es werden hierbei wiederum die Basisfunktionen gemäß der Gleichung (1) den Ausfallwahrscheinlichkeiten zugrunde gelegt. Für alle Basisfunktionen der Komponenten B1 bis B3 gilt $\lambda = 0{,}000001$. Ferner wurde das Wartungsintervall $t_1$ für die Komponente B1 auf 672 Stunden gesetzt, das Wartungsintervall für die Komponente B2 wurde auch auf 672 Stunden gesetzt (das heißt die Basisfunktionen $f_1(t, t_1)$ und $f_2(t, t_2)$ sind identisch), und das Wartungsintervall für die technische Komponente B3 wurde auf 24 Stunden festgelegt. Fig. 7 zeigt die Graphen der ODER-Verknüpfung der Basisfunktionen für B1 und B2 sowie den Graphen der Basisfunktion für B3. Fig. 8 zeigt die Systemgesamtausfallwahrscheinlichkeit $F(t, t_1, t_2)$, welche eine UND-Verknüpfung und somit eine Multiplikation der beiden in Fig. 7 gezeigten Graphen darstellt.

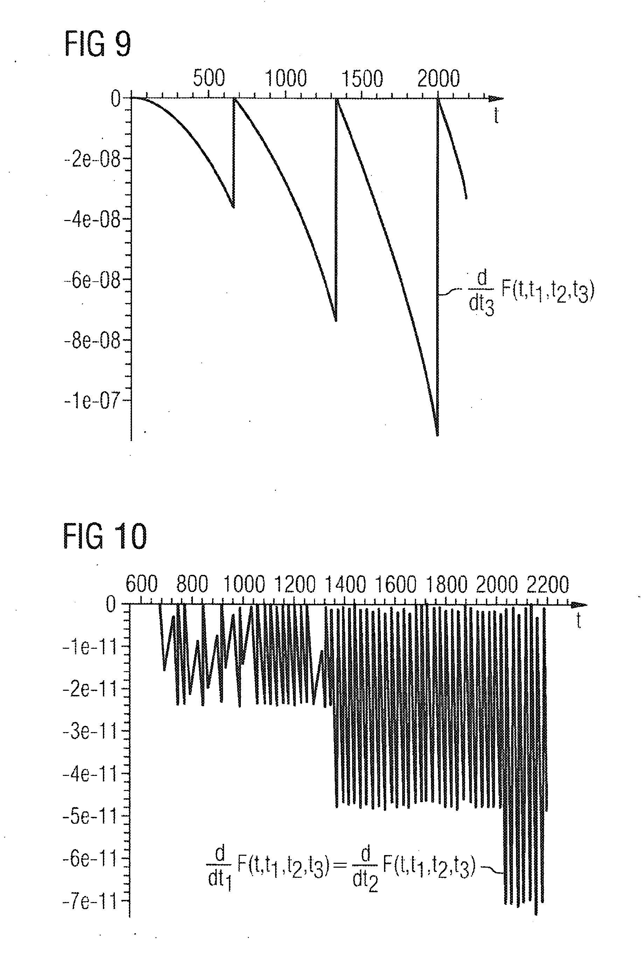

Fig. 9 zeigt die Ableitung des Graphen der Fig. 8 nach dem Wartungsintervall $t_3$. Man erkennt, dass aufgrund der UND-Verknüpfung 2 die Änderung des Wartungsintervalls der technischen Komponente B3 unmittelbar nach der Wartung der Komponenten B1 bzw. B2 zu den Zeitpunkten $t_1 = t_2 = 672$ einen geringen Einfluss auf die Gesamtausfallwahrscheinlichkeit hat, da zu diesen Zeitpunkten die Gesamtausfallwahrscheinlichkeit durch die gerade gewarteten Komponenten B1 und B2 dominiert ist.

Fig. 10 zeigt die Ableitung des in Fig. 8 gezeigten Graphen nach $t_1$ bzw. $t_2$. Man erkennt, dass diese Funktion oszilliert, was auf die UND-Verknüpfung der technischen Komponente B3, welche ein sehr kurzes Wartungsintervall $t_3=24$ aufweist, mit den Komponenten B1 und B2 zurückzuführen ist.

Die Ableitung der Gesamtwahrscheinlichkeitsfunktion nach den Wartungsintervallen wird in der hier beschriebenen Ausführungsform der Erfindung zur Beurteilung verwendet, welche der entsprechenden technischen Komponenten B1 bis B3 den größten Einfluss auf das Verhalten des Gesamtsystems, das heißt auf die Ausfallwahrscheinlichkeit des Gesamtsystems hat. Zur Bestimmung der Größe dieses Einflusses kann beispielsweise das Integral über die entsprechenden Ableitungsfunktionen verwendet werden. Für die Ableitungsfunktionen gemäß Fig. 9 und Fig. 10 ergibt sich hieraus, dass das Integral für die Ableitungsfunktion nach $t_3$ wesentlich größer ist als für die Ableitungsfunktionen nach $t_1$ bzw. $t_2$. Dies bedeutet, dass die Komponente B3 einen wesentlich stärkeren Einfluss auf die Gesamtausfallwahrscheinlichkeit des technischen Systems hat. Dies ist auch plausibel, da das Wartungsintervall dieser Komponente wesentlich kürzer ist und somit eine Veränderung des Wartungsintervalls einen größeren Einfluss auf das Gesamtsystem hat. Statt der Berechnung des Integrals zur Ermittlung des Einflusses der einzelnen Wartungsintervalle auf die Gesamtausfallwahrscheinlichkeit kann auch der Maximalwert des Absolutbetrags der entsprechenden Ableitungsfunktionen in einem vorbestimmten Zeitintervall verwendet werden. Auch hier würde sich ergeben, dass das Wartungsintervall $t_3$ den größten Einfluss auf das Gesamtsystem hat. Alternativ ist es auch möglich, einen festen Zeitpunkt festzulegen und die Werte der Ableitungsfunktionen an diesem Zeitpunkt miteinander zu vergleichen. Die technische Komponente mit derjenigen Ableitungsfunktion, die den größten Absolutwert an diesem Zeitpunkt aufweist, ist dann die Komponente mit den größten Einfluss auf das Gesamtsystem.

**EP 1 929 402 B1**

**Patentansprüche**

1. Verfahren zur rechnergestützten Analyse der Zuverlässigkeit eines technischen Systems mit einer Mehrzahl von technischen Komponenten (B1, B2, B3), bei dem:

    - die Zuverlässigkeiten der Komponenten (B1, B2, B3) jeweils durch eine Komponentenfunktion ($f_1(t, t_1)$, $f_2(t, t_2)$, $f_3(t, t_3)$) beschrieben werden, die von wenigstens einem Parameter (t) und einem der Komponente (B1, B2, B3) zugeordneten und die Zuverlässigkeit der Komponente beeinflussenden Parameterintervall ($t_1$, °$t_2$, $t_3$) des wenigstens einen Parameters (t) abhängt;
    - aus den Zuverlässigkeiten der Komponenten (B1, B2, B3) eine Systemzuverlässigkeit (F(t, t1, t2, t3)) des technischen Systems ermittelt wird;
    - für wenigstens einen Teil der Komponenten (B1, B2, B3) jeweils ein Veränderungsmaß (d/dt1 F(t, t1, t2, t3), d/dt2 F(t, t1, t2, t3), d/dt3 F(t, t1, t2, t3)) bestimmt wird, welches ein Maß für die Veränderung der Systemzuverlässigkeit (F(t, t1, t2, t3)) in Abhängigkeit von der Veränderung des Parameterintervalls (t1, t2, t3) der jeweiligen Komponente ist;
    - für wenigstens einen Teil der Komponenten jeweils aus dem Veränderungsmaß (d/dt1 F(t, t1, t2, t3), d/dt2 F(t, t1, t2, t3), d/dt3 F(t, t1, t2, t3)) eine Einflussgröße der jeweiligen Komponente (B1, B2, B3) auf die Systemzuverlässigkeit (F(t, t1, t2, t3)) ermittelt wird.

2. Verfahren nach Anspruch 1, bei dem aus den ermittelten Einflussgrößen wenigstens eine Komponente (B1, B2, B3) bestimmt wird, welche einen größeren Einfluss als andere Komponenten (B1, B2, B3), insbesondere den größten Einfluss von allen Komponenten (B1, B2, B3), auf die Systemzuverlässigkeit (F(t, $t_1$, $t_2$, $t_3$)) hat.

3. Verfahren nach Anspruch 1 oder 2, bei dem der wenigstens eine Parameter (t) die Zeit ist.

4. Verfahren nach einem der vorhergehenden Ansprüche, bei dem die den Komponenten (B1, B2, B3) zugeordneten Parameterintervalle ($t_1$, $t_2$, $t_3$) vorbestimmte Zeitintervalle, insbesondere Wartungsintervalle der Komponenten (B1, B2, B3), sind.

5. Verfahren nach einem der vorhergehenden Ansprüche, bei dem die Zuverlässigkeiten der Komponenten Größen sind, welche die Wahrscheinlichkeit eines Fehlers und/oder Ausfalls und/oder die Verfügbarkeit der jeweiligen Komponente (B1, B2, B3) charakterisieren.

6. Verfahren nach einem der vorhergehenden Ansprüche, bei dem die Komponentenfunktionen ($f_1(t, t_1)$, $f_2(t, t_2)$, $f_3(t, t_3)$) wenigstens eine Wahrscheinlichkeits-Verteilungsfunktion umfassen.

7. Verfahren nach Anspruch 6, bei dem die wenigstens eine Wahrscheinlichkeits-Verteilungsfunktion eine Weibull-Verteilung und/oder eine Gamma-Verteilung und/oder eine Lognormal-Verteilung und/oder eine Exponentialverteilung ist.

8. Verfahren nach einem der vorhergehenden Ansprüche, bei dem die Zuverlässigkeiten der Komponenten (B1, B2, B3) über eine Bool'sche Algebra miteinander verknüpft sind.

9. Verfahren nach einem der vorhergehenden Ansprüche, bei dem die Veränderungsmaße (d/$dt_1$ F(t, $t_1$, $t_2$, $t_3$), d/$dt_2$ F(t, $t_1$, $t_2$, $t_3$), d/$dt_3$ F(t, $t_1$, $t_2$, $t_3$)) jeweils die Ableitung der Systemzuverlässigkeit (F(t, $t_1$, $t_2$, $t_3$)) nach dem jeweiligen Parameterintervall ($t_1$, $t_2$, $t_3$) umfassen.

10. Verfahren nach einem der vorhergehenden Ansprüche, bei dem die Einflussgrößen wenigstens eines Teils der Komponenten (B1, B2, B3) jeweils ein Integral des Veränderungsmaßes (d/$dt_1$ F(t, $t_1$, $t_2$, $t_3$), d/$dt_2$ F(t, $t_1$, $t_2$, $t_3$), d/$dt_3$ F(t, $t_1$, $t_2$, $t_3$)) der jeweiligen Komponente (B1, B2, B3) über den wenigstens einen Parameter ($t_1$, $t_2$, $t_3$) umfassen.

11. Verfahren nach einem der vorhergehenden Ansprüche, bei dem die Einflussgrößen wenigstens eines Teils der Komponenten (B1, B2, B3) jeweils den Maximalwert des Absolutbetrags des Veränderungsmaßes (d/$dt_1$ F(t, $t_1$, $t_2$, $t_3$), d/$dt_2$ F(t, $t_1$, $t_2$, $t_3$), d/$dt_3$ F(t, $t_1$, $t_2$, $t_3$)) der jeweiligen Komponente (B1, B2, B3) in einem Intervall des wenigstens einen Parameters (t) umfassen.

12. Verfahren nach einem der vorhergehenden Ansprüche, bei dem die Einflussgrößen wenigstens eines Teils der Komponenten (B1, B2, B3) jeweils den Absolutwert des Veränderungsmaßes (d/$dt_1$ F(t, $t_1$, $t_2$, $t_3$), d/$dt_2$ F(t, $t_1$, $t_2$,

$t_3$), d/dt$_3$ F(t, $t_1$, $t_2$, $t_3$)) der jeweiligen Komponente (B1, B2, B3) an einem vorbestimmten Wert des wenigsten einen Parameters umfassen.

13. Verfahren nach einem der vorhergehenden Ansprüche, bei dem die Zuverlässigkeit eines Kraftwerks, insbesondere einer Dampfturbine des Kraftwerks, und/oder eines technischen Steuersystems, insbesondere einer Motorsteuerung, ,analysiert wird.

14. Vorrichtung zur rechnergestützen Analyse eines technischen Systems, umfassend Mittel, die zur Durchführung eines Verfahrens nach einem der vorhergehenden Ansprüche eingerichtet sind.

15. Technisches System mit einer Mehrzahl von technischen Komponenten (B1, B2, B3), umfassend eine Vorrichtung nach Anspruch 14.

16. Technisches System nach Anspruch 15, wobei das technische System ein Kraftwerk, insbesondere eine Dampfturbine des Kraftwerks, und/oder ein technisches Steuersystem, insbesondere eine Motorsteuerung, umfasst.

17. Computerprogrammprodukt mit einem auf einem maschinenlesbaren Träger gespeicherten Programmcode zur Ausführung des Verfahrens nach einem der Ansprüche 1 bis 13, wenn das Programm auf einem Rechner abläuft.

## Claims

1. Method for computer-aided analysis of the reliability of a technical system with a plurality of technical components (B1, B2, B3), in which:

   - the reliability of each of the components (B1, B2, B3) is described by a component function ($f_1$(t, $t_1$), $f_2$(t, $t_2$), $f_3$(t, $t_3$)) which is a function of at least one parameter (t) and a parameter interval ($t_1$, $t_2$, $t_3$), for the at least one parameter (t), which is assigned to one of the components (B1, B2, B3) and affects the reliability of the component;
   - from the reliabilities of the components (B1, B2, B3) is determined a system reliability (F(t, t1, t2, t3)) for the technical system;
   - for each of at least some of the components (B1, B2, B3) is determined a change magnitude (d/dt1 F(t, t1, t2, t3), d/dt2 F(t, t1, t2, t3), d/dt3 F(t, t1, t2, t3)), which is a measure of the change in the system reliability (F(t, t1, t2, t3)) as a function of the change in the parameter interval (t1, t2, t3) for the component concerned;
   - the change magnitude (d/dt1 F(t, t1, t2, t3), d/dt2 F(t, t1, t2, t3), d/dt3 F(t, t1, t2, t3)) for each of at least some of the components is used to determine a factor for the effect of the component concerned (B1, B2, B3) on the system reliability (F(t, t1, t2, t3)).

2. Method according to claim 1 in which, from the factors determined, at least one component (B1, B2, B3) is identified which has a greater effect on the system reliability (F(t, $t_1$, $t_2$, $t_3$)) than the other components (B1, B2, B3), in particular has the greatest effect of all the components (B1, B2, B3).

3. Method according to claim 1 or 2, in which the at least one parameter (t) is time.

4. Method according to one of the preceding claims, in which the parameter intervals ($t_1$, $t_2$, $t_3$) assigned to the components (B1, B2, B3) are predefined time intervals, in particular maintenance intervals for the components (B1, B2, B3).

5. Method according to one of the preceding claims, in which the reliabilities of the components are variables which characterize the probability of a fault and/or failure and/or the availability of the component concerned (B1, B2, B3).

6. Method according to one of the preceding claims, in which the component functions ($f_1$(t, $t_1$), $f_2$(t, $t_2$), $f_3$(t, $t_3$)) comprise at least one probability distribution function.

7. Method according to claim 6, in which the at least one probability distribution function is a Weibull distribution and/or a gamma distribution and/or a lognormal distribution and/or an exponential distribution.

8. Method according to one of the preceding claims, in which the reliabilities of the components (B1, B2, B3) are combined with each other using a Boolean algebra.

9. Method according to one of the preceding claims, in which each of the change magnitudes ($d/dt_1$ $F(t, t_1, t_2, t_3)$, $d/dt_2$ $F(t, t_1, t_2, t_3)$, $d/dt_3$ $F(t, t_1, t_2, t_3)$) comprises the derivative of the system reliability ($F(t, t_1, t_2, t_3)$) with respect to the parameter interval concerned ($t_1, t_2, t_3$).

10. Method according to one of the preceding claims, in which the factors for at least some of the components (B1, B2, B3) comprise in each case an integral, with respect to the at least one parameter ($t_1, t_2, t_3$), of the change magnitude ($d/dt_1$ $F(t, t_1, t_2, t_3)$, $d/dt_2$ $F(t, t_1, t_2, t_3)$, $d/dt_3$ $F(t, t_1, t_2, t_3)$) for the component concerned (B1 B2, B3).

11. Method according to one of the preceding claims, in which the factors for each of at least some of the components (B1 B2, B3) comprise the maximum value of the absolute value of the change magnitude ($d/dt_1$ $F(t, t_1, t_2, t_3)$, $d/dt_2$ $F(t, t_1, t_2, t_3)$, $d/dt_3$ $F(t, t_1, t_2, t_3)$) for the component concerned (B1, B2, B3) in an interval of the at least one parameter ($t$).

12. Method according to one of the preceding claims, in which the factors for each of at least some of the components (B1 B2, B3) comprise the absolute of the change magnitude ($d/dt_1$ $F(t, t_1, t_2, t_3)$, $d/dt_2$ $F(t, t_1, t_2, t_3)$, $d/dt_3$ $F(t, t_1, t_2, t_3)$) for the component concerned (B1 B2, B3) at a predefined value of the at least one parameter.

13. Method according to one of the preceding claims, in which the reliability of a power station, in particular a steam turbine in the power station and/or of a technical control system, in particular a motor control unit, is analysed.

14. Device for the computer-aided analysis of a technical system, incorporating facilities which are configured for carrying out a method according to one of the preceding claims.

15. Technical system with a plurality of technical components (B1, B2, B3), incorporating a device according to claim 14.

16. Technical system according to claim 15, where the technical system comprises a power station, in particular a steam turbine in the power station and/or a technical control system, in particular a motor control unit.

17. Computer program product with program code, stored on a machine-readable medium, for carrying out the method according to one of claims 1 to 13 when the program is executed on a computer.

**Revendications**

1. Procédé d'analyse informatisée de la fiabilité d'un système technique comportant une pluralité de composants techniques (B1, B2, B3), dans lequel

   - les fiabilités des composants (B1, B2, B3) sont décrites respectivement par une fonction de composants ($f_1$ $(t, t_1)$, $f_2(t, t_2)$, $f_3(t, t_3)$) qui dépend d'au moins un paramètre ($t$) et d'un intervalle de paramètres ($t_1, t_2, t_3$) de l'au moins un paramètre ($t$), lequel intervalle est associé au composant (B1, B2, B3) et influence la fiabilité du composant ;
   - une fiabilité ($F(t, t_1, t_2, t_3)$) du système technique est déterminée à partir des fiabilités des composants (B1, B2, B3) ;
   - pour au moins une partie des composants (B1, B2, B3), respectivement une mesure de modification ($d/dt_1$ $F(t, t_1, t_2, t_3)$, $d/dt_2$ $F(t, t_1, t_2, t_3)$, $d/dt_3$ $F(t, t_1, t_2, t_3)$) est déterminée, laquelle est une mesure de la modification de la fiabilité du système ($F(t, t_1, t_2, t_3)$) en fonction de la modification de l'intervalle de paramètres ($t_1, t_2, t_3$) de chaque composant;
   - pour au moins une partie des composants, une grandeur d'influence de chaque composant (B1, B2, B3) sur la fiabilité du système ($F(t, t_1, t_2, t_3)$) est déterminée respectivement à partir de la mesure de modification ($d/dt_1$ $F(t, t_1, t_2, t_3)$, $d/dt_2$ $F(t, t_1, t_2, t_3)$, $d/dt_3$ $F(t, t_1, t_2, t3)$).

2. Procédé selon la revendication 1, dans lequel est déterminé, à partir des grandeurs d'influence déterminées, au moins un composant (B1, B2, B3) qui a sur la fiabilité du système ($F(t, t_1, t_2, t_3)$) une influence plus grande que celle d'autres composants (B1, B2, B3), et plus particulièrement la plus grande influence en comparaison avec tous les composants (B1, B2, B3).

3. Procédé selon la revendication 1 ou 2, dans lequel l'au moins un paramètre ($t$) est le temps.

4. Procédé selon l'une des revendications précédentes, dans lequel les intervalles de paramètres s ($t_1, t_2, t_3$) associés

aux composants (B1 B2, B3) sont des intervalles de temps prédéterminés, et plus particulièrement des intervalles de maintenance des composants (B1, B2, B3).

5. Procédé selon l'une des revendications précédentes, dans lequel les fiabilités des composants sont des grandeurs qui caractérisent la probabilité d'une erreur et/ou d'une défaillance et/ou la disponibilité du composant respectif (B1, B2, B3).

6. Procédé selon l'une des revendications précédentes, dans lequel les fonctions de composants ($f_1(t, t_1)$, $f_2(t, t_2)$, $f_3(t, t_3)$) incluent au moins une fonction de distribution de probabilité.

7. Procédé selon la revendication 6, dans lequel l'au moins une fonction de distribution de probabilité est une distribution de Weibull et/ou une distribution gamma et/ou une distribution lognormale et/ou une distribution exponentielle.

8. Procédé selon l'une des revendications précédentes, dans lequel les fiabilités des composants (B1, B2, B3) sont associées entre elles par l'intermédiaire d'une algèbre booléenne.

9. Procédé selon l'une des revendications précédentes, dans lequel les mesures de modification ($d/dt_1 F(t, t_1, t_2, t_3)$, $d/dt_2 F(t, t_1, t_2, t_3)$, $d/dt_3 F(t, t_1, t_2, t_3)$) incluent respectivement la dérivée de la fiabilité du système ($F(t, t_1, t_2, t_3)$) après l'intervalle de paramètres respectif ($t_1$, $t_2$, $t_3$).

10. Procédé selon l'une des revendications précédentes, dans lequel les grandeurs d'influence d'au moins une partie des composants (B1, B2, B3) incluent respectivement une intégrale de la mesure de modification ($d/dt_1 F(t, t_1, t_2, t_3)$, $d/dt_2 F(t, t_1, t_2, t_3)$, $d/dt_3 F(t, t_1, t_2, t_3)$) du composant respectif (B1, B2, B3) sur l'au moins un paramètre ($t_1$, $t_2$, $t_3$).

11. Procédé selon l'une des revendications précédentes, dans lequel les grandeurs d'influence d'au moins une partie des composants (B1, B2, B3) incluent respectivement la valeur maximale de la valeur absolue de la mesure de modification ($d/dt_1 F(t, t_1, t_2, t_3)$, $d/dt_2 F(t, t_1, t_2, t_3)$, $d/dt_3 F(t, t_1, t_2, t_3)$) du composant respectif (B1, B2, B3) dans un intervalle de l'au moins un paramètre (t).

12. Procédé selon l'une des revendications précédentes, dans lequel les grandeurs d'influence d'au moins une partie des composants (B1, B2, B3) incluent respectivement la valeur absolue de la mesure de modification ($d/dt_1 F(t, t_1, t_2, t_3)$, $d/dt_2 F(t, t_1, t_2, t_3)$, $d/dt_3 F(t, t_1, t_2, t_3)$) du composant respectif (B1, B2, B3) pour une valeur prédéterminée de l'au moins un paramètre.

13. Procédé selon l'une des revendications précédentes, dans lequel est analysée la fiabilité d'une centrale électrique, et plus particulièrement d'une turbine à vapeur de la centrale électrique, et/ou d'un système technique de commande, et plus particulièrement d'une commande de moteur.

14. Dispositif d'analyse informatisée d'un système technique, comprenant des moyens qui sont aménagés pour exécuter un procédé selon l'une des revendications précédentes.

15. Système technique avec une pluralité de composants techniques (B1, B2, B3), comprenant un dispositif selon la revendication 14.

16. Système technique selon la revendication 15, le système technique comprenant une centrale électrique, et plus particulièrement une turbine à vapeur de la centrale électrique, et/ou un système technique de commande, et plus particulièrement une commande de moteur.

17. Produit de programme informatique avec un code de programme stocké sur un support lisible par machine pour exécuter le procédé selon l'une des revendications 1 à 13 lorsque le programme tourne sur un ordinateur.

## FIG 1

## FIG 2

## FIG 3

$$F(t,t_1,t_2) = = f_1(t,t_1) \vee f_2(t,t_2)$$

1000

$$\frac{d}{dt_1} F(t,t_1,t_2) = \frac{d}{dt_2} F(t,t_1,t_2)$$

## FIG 4

$$F(t,t_1,t_2) = f_1(t,t_1) \vee f_2(t,t_2)$$

1000

$$\frac{d}{dt_2} F(t,t_1,t_2)$$

$$\frac{d}{dt_1} F(t,t_1,t_2)$$

FIG 5

$$F(t,t_1,t_2) = = f_1(t,t_1) \wedge f_2(t,t_2)$$

$$\frac{d}{dt_1} F(t,t_1,t_2) = \frac{d}{dt_2} F(t,t_1,t_2)$$

FIG 6

$$F(t,t_1,t_2) = = f_1(t,t_1) \vee f_2(t,t_2)$$

$$\frac{d}{dt_2} F(t,t_1,t_2)$$

$$\frac{d}{dt_1} F(t,t_1,t_2)$$

## FIG 7

Graph with labels $f_1(t,t_1) \vee f_2(t,t_2)$ and $f_3(t,t_3)$; vertical axis from 0 to 0.0012, horizontal axis $t$ from 200 to 800.

## FIG 8

Graph with label $F(t,t_1,t_2,t_3)$; vertical axis from 0 to 3e-08, horizontal axis $t$ from 200 to 800.

## FIG 9

$$\frac{d}{dt_3} F(t, t_1, t_2, t_3)$$

## FIG 10

$$\frac{d}{dt_1} F(t, t_1, t_2, t_3) = \frac{d}{dt_2} F(t, t_1, t_2, t_3)$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- System reliability and sensitivity factors via the MPPSS method. **Sues R. H. et al.** Probabilistic Engineering Mechanics. Computational Mechanics Publications, April 2005, vol. 20, 148-157